# EUROPEAN PATENT APPLICATION

(11) **EP 2 290 627 A1**
(43) Date of publication of application: **02.03.2011**
(21) Application number: 10174086.8
(22) Date of filing: 26.08.2010
(51) Int. Cl.: G07G 1/00

(54) **Integrated point of sale (POS) terminal**

(30) Priority: 27.08.2009 TW 098128901
(71) Applicant: Posiflex Technology, Inc., Chinese Tapei (TW)
(72) Inventor: Chen, Huang-Yan, Taipei County 248 (TW)
(74) Representative: Guéné, Patrick

(57) **Abstract**

The integrated point of sale (POS) terminal (10, 20, 30) includes: a calculating device (23); and a monitor (11), an input device (13) and an output device (12) respectively electrically connected to the calculating device (23). An input data is inputted into the calculating device (23) via the input device (13) and displays on the monitor (11), and then the output data is displayed thereon and outputted from the output device (12) post calculation. In other POS (10, 20, 30), the input device (13) performs input and output functions, or a touch panel might be the input device (13).

## Description

The present invention relates to a point of sale (POS) system. In particular, the present invention relates to an integrated POS system, which effectively integrates the main board, the flat panel display, the input device, the output device and so on therein.

In the conventional POS system, the input device (such as keyboard, card reader and magnetic strip, etc.) is individually electrically connected to a computer main board. When data for cashing information, credit card, electronic tender and so on are input to the computer main board, an invoice, a receipt or a credit card receipt is output by another external device. Due to the variety of application requirements, a variety of external peripheral devices could be required, resulting in need for more operating space, mass amounts of data and power cabling and more potential points of failure. This combination creates the potential for extended downtime and maintenance costs.

It is therefore attempted by the applicant to resolve the above situation encountered in the prior article.

Based on the deficiencies in the prior article, a fully integrated point of sale (POS) is provided in the present invention. A space is formed inside the housing of the POS by placing the system I/O on an inclined platform. This creates an acceptable location for mounting of an additional output device. The flat panel display is located on the front of the housing, thus integrating the flat panel display and the output device are into the POS. Furthermore, the flat panel display, the output device and the input devices are commonly integrated in the POS.

In accordance with the aspect of the present invention, a point of sale (POS) is provided and includes: a displaying device electrically connected to a main board; and an input/output device displayed on the displaying device.

Preferably, the input/output device receives the first data, the first data is transmitted to and processed by the main board and the processed first data is displayed on the displaying device.

Preferably, the POS further includes an input device, which is one selected from a group consisting of a magnetic strip reader, a card reader and a magnetic strip/card reading combination machine and is electrically connected to the main board and receiving a second data wherein the second data is processed by the main board and displayed on the displaying device.

Preferably, the POS further includes an inclined plate and an output device including a printer electrically connected to the main board and integrated with the displaying device on the inclined plate, wherein the processed first data and the processed second data are output from the output device, and a continuous roll printing and a paper-cutting at the printer is not interfered by the displaying device.

Preferably, the printer further includes an auto-cutter and a manual-cutter.

Preferably, the POS further includes at least one port electrically connected between the main board and at least one of the input/output device, the input device and the output device.

Preferably, the POS includes a housing disposing therein the output device, and a plate engaged with the housing.

Preferably, the output device further has a cover, the POS further includes a button disposed on the housing and a ratchet having a first end connected to the button and a second end connected to the displaying device, and the ratchet is released to erect the displaying device such that the cover of the output device is opened when the button is pressed.

Preferably, the displaying device is one of a liquid crystal display (LCD) and a plasma flat panel (PFP) display, wherein the LCD has a size ranged between 7 inches and 15 inches when the displaying device is the LCD.

Preferably, the displaying device has a screen and the input/output device is displayed on the screen.

Preferably, the displaying device is a touch panel. The displaying device is locked in the housing via a plastic snap.

The above objectives and advantages of the present invention will become more readily apparent to those ordinarily skilled in the art after reviewing the following detailed descriptions and accompanying drawings, in which:

Fig. 1(A) schematically illustrates a stereo diagram showing the first preferred embodiment of the present invention;

Figs. 1(B), 1(C), 1(D), 1(E), 1(F) and 1(G) respectively schematically illustrates (B) a front view, (C) a vertical view, (D) a bottom view, (E) a left side view, (F) a right side view and (G) a rearview of the first preferred embodiment of the present invention;

Fig. 2 schematically illustrates a stereo diagram showing the second preferred embodiment of the present invention;

Fig. 3(A) schematically illustrates a stereo diagram showing the third preferred embodiment of the present invention; and

Figs. 3(B), 3(C), 3(D), 3(E), 3(F) and 3(G) respectively schematically illustrates (B) a front view, (C) a vertical view, (D) a bottom view, (E) a left side view, (F) a right side view and (G) a rearview of the third preferred embodiment of the present invention.

The present invention will now be described more specifically with reference to the following Embodiments. It is to be noted that the following descriptions of preferred Embodiments of this invention are presented herein for purpose of illustration and description only; it is not intended to be exhaustive or to be limited to the precise form disclosed.

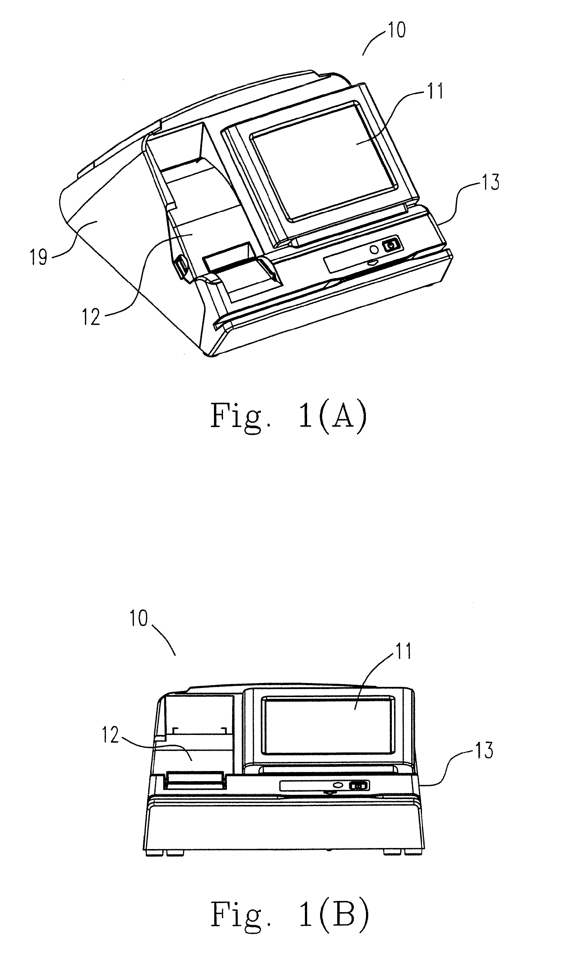

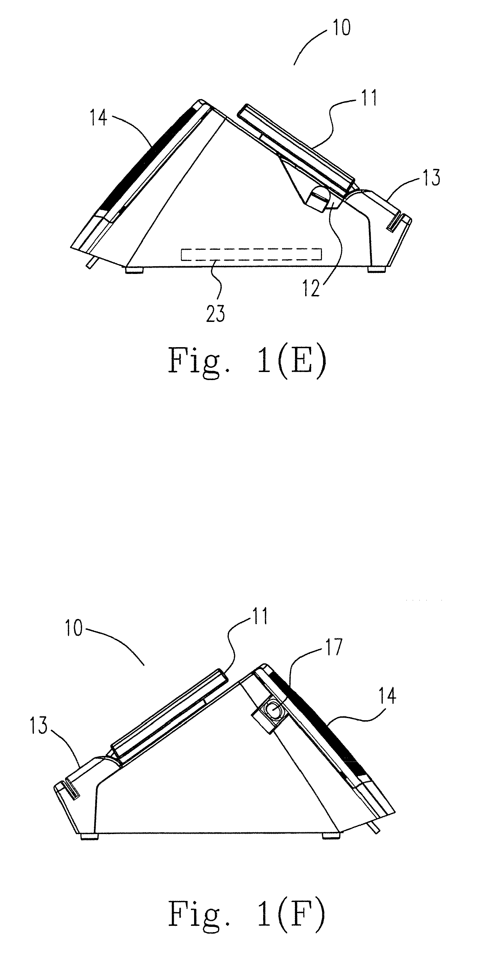

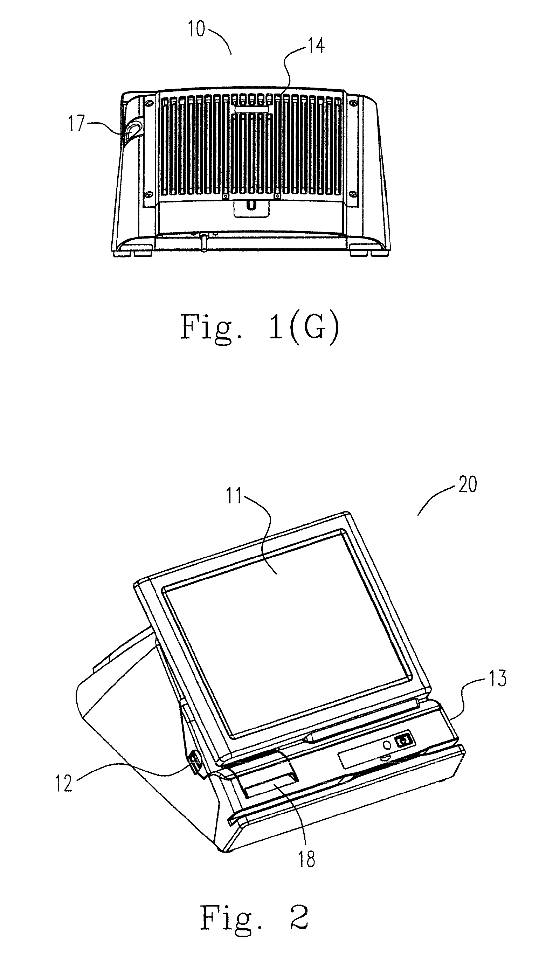

Except for the particular description, the component and its reference numeral in the different drawings of the specification are referred to the same component and the same reference numeral. For instance, the reference numeral "11" in both Figs. 1(A) and 2 is referred to the flat panel display.

Please refer to Fig. 1(A), which schematically illustrates a stereo diagram showing the first preferred embodiment of the present invention. The POS 10 is mainly includes flat panel display 11, printer 12 and magnetic strip reader 13, in which these three components are integrated in the housing 19. Flat panel display 11 is preferably a liquid crystal display (LCD) or a touch panel, which adopts the flat panel display of 7 to 15 inches (e.g. 7, 8, 10, 12 inches, etc.) according to the designing specification of POS 10. Flat panel display 11 of the first preferred embodiment preferably has a size of 7 inches or 8 inches. Certainly, the flat panel display with other size is also adequate. The usage of flat panel display 11 can decrease the weight of POS 10, obtain better space configuration and improve the heat dispersion of POS 10.

The input device includes but not limit in the magnetic strip reader 13. Other IC-chip card reader, magnetic strip/card reading combination machine also can act as the input device. A main board (23, Fig. 1(E)) is disposed in the housing 19 of POS 10, and can be the circuit board having logic algorithm function for receiving the cashing data from the input device and calculating and outputting. Flat panel display 11, printer 12 and magnetic strip reader 13 are individually electrically connected to the main board. When POS 10 is operated, the storage medium (e.g. the magnetic strip) data of the card is input to the main board through the reader 13, and is presented on the screen of flat panel display 11. After the user's operation and the main board calculation, the output data is presented on the screen of flat panel display 11 and is further output from the printer 12.

Please refer to Figs. 1(B) to 1(G), which schematically illustrates (B) a front view, (C) a vertical view, (D) a bottom view, (E) a left side view, (F) a right side view and (G) a rearview of the first preferred embodiment of the present invention. Except for the components and their reference numerals showing on the specific directional drawings, the reference numerals in Figs. 1(B) to 1(G) still adopts those in Fig. 1(A). An inclined plate is designed on housing 19 of POS 10 in the first preferred embodiment, such that the POS 10 laterally looks like a "mountain" shape and a space is formed inside the housing 19. Printer 12 can be disposed in the space and flat panel display 11 can be disposed on the housing 19. Therefore, flat panel display 11 and printer 12 can be integrated and disposed in/on the POS 10 at the same time.

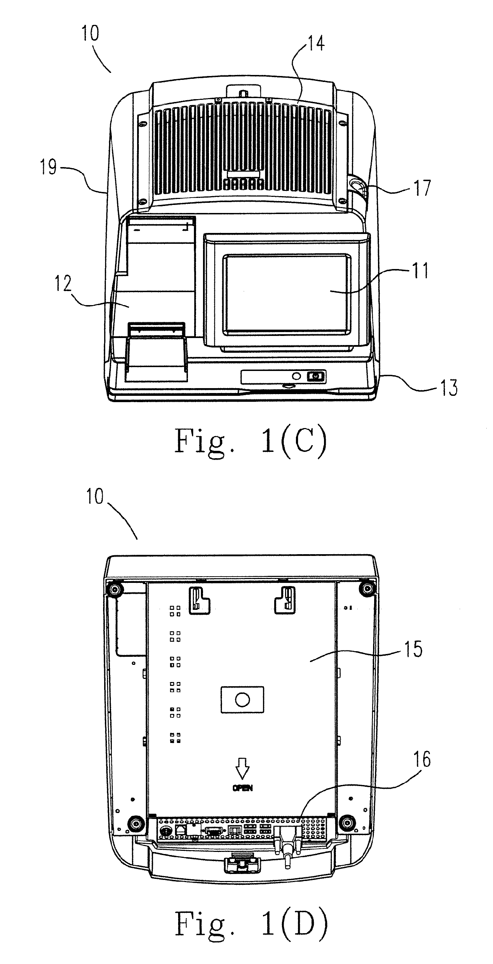

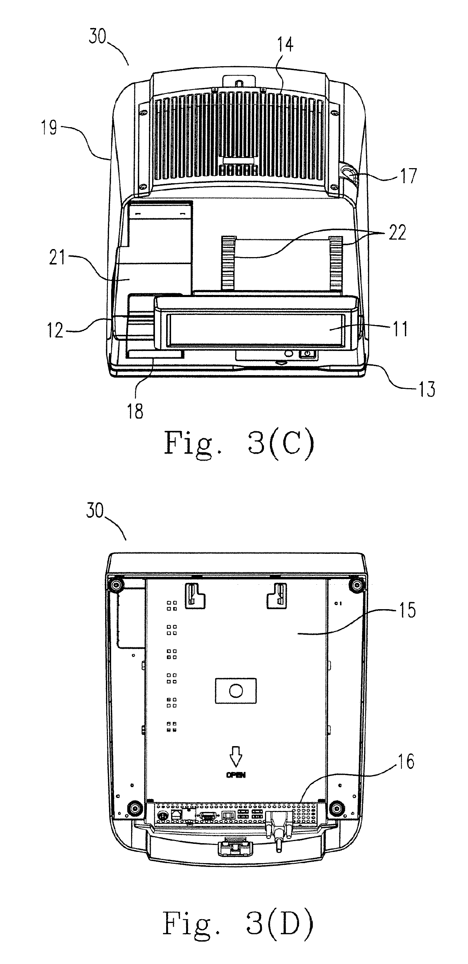

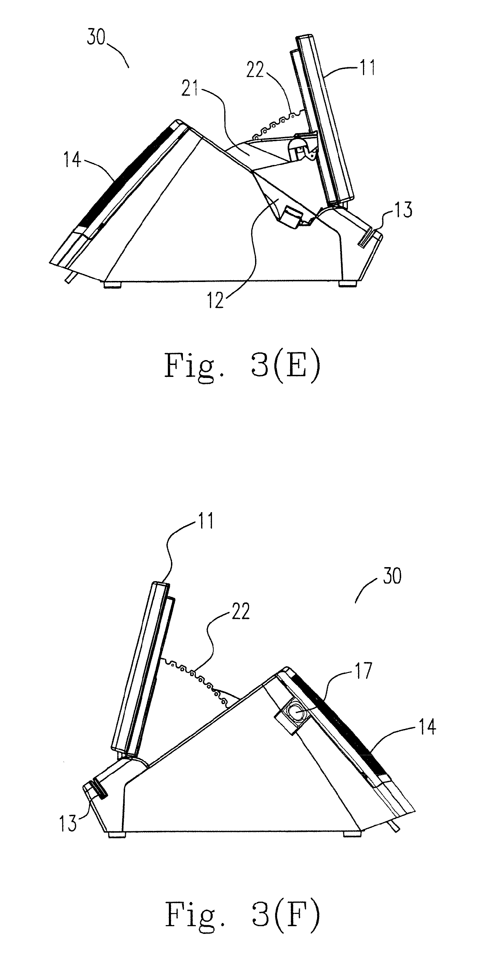

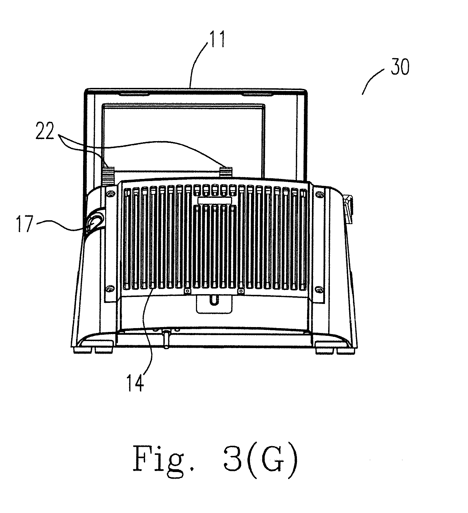

In Fig. 1(C), a set of heat dissipation fins 14 is further disposed on the POS 10, the warm air generated inside the space of POS 10 can be effectively exhausted by the heat dissipation apparatus composed of the fins 14, which is beneficial for the long-term operation to the POS 10. A button 17 and a ratchet (not shown in Fig. 1(C) but shown as "23" in Fig. 3(E)) is disposed at the lateral side of housing 19 of POS 10 to control the erection/descent. These technical characteristics and the advantages are further illustrated in the following embodiment.

Please continuously refer to Fig. 1(C), since 7- or 8-inch flat panel display 11 is adopted in POS 10 of the first preferred embodiment, flat panel display 11 and printer 12 are not overlapped in the space configuration. Thus, the auto-cutter and the manual cutter can be disposed in the printer 12 to be beneficial for paper-cutting post the continuous roll printing.

In Fig. 1(D), plate 15 in the bottom of POS 10 is engaged to the housing 19, rather than screwed to the housing 19. It is helpful for rapidly assembling or disassembling the electronic device in or out the POS 10. Various ports 16 with different specifications are also disposed on the bottom of POS 10, such as RJ-45 connector pinouts, USB (universal serial bus), VGA (video graphics array) connector and so on, so as to increase the external electronic devices which are compatible with the port 16. Since port 16 is disposed at one end of POS 10 approached to the magnetic strip reader 13, the user can easily assemble or disassemble the external electronic devices when POS 10 is disposed on the edge of the desk or counter. The designed drawback that the ports are configured on the back of the conventional POS but are not adequate for rapidly assembling/disassembling is overcome in the configured design of the port 16. Alternatively, the user can rapidly increase or remove the external electronic devices connected to POS 10 by using the holes on the desk or counter, and achieve the purpose for integrating external circuits.

Please refer to Fig. 2, which schematically illustrates the stereo diagram showing the second preferred embodiment of the present invention. In Fig. 2, a liquid crystal display (LCD) 11 is disposed on the front side of POS 20, and the preferred size of LCD is 12 inches. An output bin 18 and a magnetic strip reader 13 are also disposed on the front side of POS 20. In Embodiment 2, since the 12-inch LCD 11 basically occupies the most area of the slide plate of POS 20, printer 12 is embedded in the POS 20 and only shows the output bin 18. After the cashing data is printed with the printer 12, the invoice or receipt is cut by the auto-cutter disposed at the output bin 18, and the user gets the invoice or receipt. A set of rail apparatus is disposed on the rear surface of LCD 11, and the corresponding rail is disposed on the POS 20 to move LCD 11 with the rail to show the cover of printer 12, so that the continuous roll invoice or receipt is changed. In another preferred embodiment, LCD 11 is locked in the housing 19 via a plastic snap, and the traditional lock with screw is unnecessary.

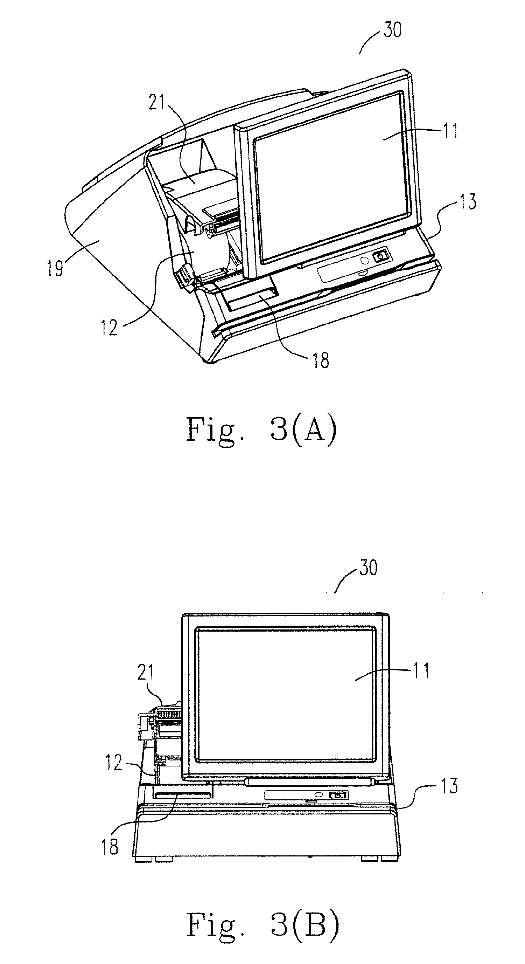

Please together refer to Figs. 3(A), 3(C), 3(E) and 3(F) showing the third preferred embodiment, POS 30 further includes the button 17 and ratchet 22 disposed on the housing 19, and one end of ratchet 22 is connected to button 17 and another end thereof is connected to LCD 11. The user press down the button 17 to release ratchet 22, and ratchet 22 is swing and the pivot connected between 10-inch LCD 11 and housing 19 is pivoted to erect LCD 11, and then the cover 21 of printer 12 is opened and the continuous roll invoice or receipt in the printer 12 can be replaced. Furthermore, the erected position of LCD 11 of POS 30 does not obstruct the opening of cover 21 of printer 12 and the paper-cutting of output bin 18. The user can simultaneously check out and replace the continuous roll invoice. Therefore, LCD 11 and printer 12 can be together integrated in the POS 10 of the present invention. Printer 12 is partially covered by flat panel display 11, but the continuous roll printing and paper-cutting at the output bin 18 of printer 12 are not influenced by the disposition of flat panel display 11. In addition, because of the erection of LCD 11, POS 30 also shows the interior space, and the user can further repair the device inside the POS 30. Because of the advanced design in the present invention that (i) ratchet 22 is disposed behind LCD 11 to firmly erect LCD 11 and (ii) teller's fingers would not be hurt by ratchet 22, the drawbacks in the prior art that (i) the erection/descent of display is adjusted by the hinge connected between display and housing, (2) the hinge would be loose for a long term usage to harm fingers are overcome.

In addition, please refer to Figs. 3(B) and 3(C), it is noted that 10-inch LCD 11 and the printer are partially or fully overlapped at the front view and the vertical view. The overlapped configuration can save the space configuration for each component in the POS 30 and achieve the demand for artistic design. However, for avoiding from the paper cutting of printer 12, the output bin 18 and the manual cutter of printer 12 are disposed on the front portion of printer 12 (i.e. the surface near the user). This design is significantly different from the conventional output bin which is disposed at upper rear portion (i.e. one part away from the user) or the lower front portion of the printer or the machine. The conventional product is not adequate to the human engineering design and has worse visual effect. The design of output bin 18 of printer 12 of the present invention not only conform the design principle of human engineering, but also has excellent visual effect for the POSs 10, 20, 30. Furthermore, when 10- or 12-inch LCD 11 is adopted in the POS 30, the auto-cutter rather than the manual cutter is adopted as the paper cutting device in the printer 12 due to the space configuration.

The structures and the operations of three integrated point of sales in the present invention are illustrated as above. Two or more than two output/input devices are only necessary to integrate as the integrated POS in the present invention. In other preferred embodiments, the input device also can act as the output device at the same time. For instance, the touch panel disposed on the screen of flat panel display can be the input/output device. After the stored data in the storage medium of card is read by the magnetic strip reader of the POS, presented on the flat panel display and computed with the main board, the processed data can be presented on the flat panel display again. Transactions can be accomplished by the POS even when the printer is not installed into the POS.

In another preferred embodiment, the main board, the flat panel display and the printer are installed in the POS, and the touch panel on the screen of the flat panel display acts as the input device. The transaction data is keyed in with the touch panel and output from the printer post the main board processing, and the transaction is therefore completed.

Therefore, the main board, the flat panel display and input device and/or the output device and so on can be effectively integrated in the POS in the present invention. Further, the input and output devices with different specifications and interfaces can be rapidly increased or removed so as to easily repair the integrated POS, reduce the unnecessary wiring, decrease the setup costs, and maintain workspace and counter cleanliness. Further, the POS can meet the requirements of human engineering design and artistic design because of the configuration of the output bin and the auto-cutter of printer. The POS of the present invention can be applied in the retail, department stores, restaurants and hospitality.

## Claims

1. A point of sale (POS) (10, 20, 30), **characterized by** comprising:
a displaying device (11) electrically connected to a main board (23); and
an input/output device displayed on the displaying device (11).

2. The POS (10, 20, 30) according to claim 1, **characterized in that** the input/output device receives a first datum, the first datum is transmitted to and processed by the main board (23) and the processed first datum is displayed on the displaying device (11).

3. The POS (10, 20, 30) according to claims 1 or 2 further **characterized by** comprising an input device (13), being one selected from a group consisting of a magnetic strip reader, a card reader and a magnetic strip/card reading combination machine, electrically connected to the main board (23) and receiving a second datum, wherein the second datum is processed by the main board (23) and displayed on the displaying device (11).

4. The POS (10, 20, 30) according to any one of claims 1 to 3 further **characterized by** comprising an inclined plate and an output device (12) including a printer (12) electrically connected to the main board (23) and integrated with the displaying device (11) on the inclined plate, wherein the processed first datum and the processed second datum are output from the output device (12), and a continuous roll printing and a paper-cutting at the printer (12) is not interfered by the displaying device (11).

5. The POS (10, 20, 30) according to any one of claims 1 to 4, **characterized in that** the printer (12) further comprises an auto-cutter and a manual-cutter.

6. The POS (10, 20, 30) according to any one of claims 1 to 5 further **characterized by** comprising at least one port (16) electrically connected between the main board (23) and at least one of the input/output device, the input device (13) and the output device (12).

7. The POS (10, 20, 30) according to any one of claims 1 to 6 **characterized by** comprising a housing (19) disposing therein the output device (12), and a plate (15) engaged with the housing (19).

8. The POS (10, 20 30) according to any one of claims 1 to 7, **characterized in that** the output device (12) further has a cover (21), the POS (10, 20, 30) further comprises a button (17) disposed on the housing (19) and a ratchet (22) having a first end connected to the button (17) and a second end connected to the displaying device (11), and the ratchet (22) is released to erect the displaying device (11) such that the cover (21) of the output device (12) is opened when the button (17) is pressed.

9. The POS (10, 20, 30) according to any one of claims 1 to 8, **characterized in that** the displaying device (11) is one of a liquid crystal display (LCD) and a plasma flat panel (PFP) display, wherein the LCD has a size ranged between 7 inches and 15 inches when the displaying device (11) is the LCD.

10. The POS (10, 20, 30) according to any one of claims 1 to 9, **characterized in that** the displaying device (11) has a screen and the input/output device is displayed on the screen (11).

11. The POS (10, 20, 30) according to any one of claims 1 to 10, **characterized in that** the displaying device (11) is a touch panel.

12. The POS (10, 20, 30) according to any one of claims 1 to 11, **characterized in that** the displaying device (11) is locked in the housing 19 via a plastic snap.
